# EUROPÄISCHE PATENTSCHRIFT

(11) **EP 4 436 111 B1**
(45) Veröffentlichungstag und Bekanntmachung des Hinweises auf die Patenterteilung: **20.05.2026**
(21) Anmeldenummer: 24194248.1
(22) Anmeldetag: 23.06.2022
(51) Int. Cl.: H04L 9/40

(54) **VERFAHREN, VORRICHTUNGEN UND SYSTEM ZUM ZUGRIFF AUF EINE PRODUKTIONSEINRICHTUNG**
METHOD, APPARATUSES AND SYSTEM FOR ACCESSING A PRODUCTION FACILITY
PROCÉDÉ, DISPOSITIFS ET SYSTÈME D'ACCÈS À UN ÉQUIPEMENT DE PRODUCTION

(30) Priorität: 09.07.2021 DE 102021117792
(43) Veröffentlichungstag der Anmeldung: 25.09.2024
(62) Teilanmeldung aus: 22740310.2
(73) Patentinhaber: BKS GmbH, 42549 Velbert (DE)
(72) Erfinder: Saam, Jan, 53179 Bonn (DE); Gille, Sebastian, 45529 Hattingen (DE); Renseler, Jannik, 41751 Viersen-Boisheim (DE)
(74) Vertreter: DREISS Patentanwälte PartG mbB

(56) Entgegenhaltungen:
- US-A1- 2019 180 286
- US-A1- 2020 145 212
- US-B2- 9 191 213

## Beschreibung

Die Erfindung betrifft Verfahren, Vorrichtungen und ein System zum Zugriff auf eine Produktionseinrichtung, insbesondere in einem Bestellprozess für Schließanlagen oder Teilen davon.

In einem derartigen Bestellprozess können Sicherungskarten vorgesehen sein, die im Bestellprozess einen sicheren Zugriff auf die Produktionseinrichtung ermöglichen. Beispielsweise wird nur bei einer erfolgreichen Authentifizierung im Bestellprozess eine bestellte Schließanlage oder ein bestelltes Teil einer Schließanlage zur Fertigung durch die der Produktionseinrichtung freigegeben.

Die Verfahren und Vorrichtungen gemäß den unabhängigen Ansprüchen bieten eine sichere mobile Authentifizierung des Zugriffs auf die Produktionseinrichtung.

Die Erfindung ist in Anspruch 1 definiert.

Dieses Verfahren kann als App für ein Mobiltelefon ausgebildet sein. Die nutzerspezifische passive oder aktive Sendeeinrichtung kann eine Sicherungskarte, **z.B.** eine Hybridkarten mit Nahfeldkommunikation und Magnetstreifen sein. Die Operation kann eine Verschlüsselung gemäß einem kryptographischen Verschlüsselungsverfahren oder gemäß einem kryptographischen Signaturverfahren sein.

Dieses Verfahren bietet vorzugsweise einen hohen Sicherheitsstandard durch dynamische Verschlüsselung oder Authentifizierung wobei das Verfahren vorsieht, dass die Operation auf dem Datensatz mit dem ersten Schlüssel des zweiten Schlüsselpaares den Datensatz verschlüsselt oder dass die Operation auf dem Datensatz mit dem ersten Schlüssel des zweiten Schlüsselpaares den Datensatz signiert.

Das Verfahren kann zudem einen Empfang von Daten am Endgerät und von der anderen Recheneinrichtung umfassen, wobei die Daten durch eine Operation auf dem zweiten Teil der Identifikationsdaten mit dem zweiten Schlüssel des ersten Schlüsselpaares gesichert sind, und ein Prüfen und/oder Bestimmen des zweiten Teils der Identifikationsdaten durch eine Operation auf den Daten mit dem ersten Schlüssel des ersten Schlüsselpaares.

Zur Erhöhung des Sicherheitsstandards kann vorgesehen sein, dass die Operation auf den Daten mit dem ersten Schlüssel des ersten Schlüsselpaares die Daten entschlüsselt oder dass die Operation auf den Daten mit dem ersten Schlüssel des ersten Schlüsselpaares die Daten verifiziert.

Ein unberechtigter Zugriff wird wirkungsvoll vermieden.

Das Verfahren kann zur Erhöhung der Sicherheit vorsehen, dass die Operation auf dem Datensatz mit dem ersten Schlüssel des zweiten Schlüsselpaares den Datensatz verschlüsselt wobei die Operation auf dem Datensatz mit dem zweiten Schlüssel des zweiten Schlüsselpaares den Datensatz entschlüsselt, oder dass die Operation auf dem Datensatz mit dem ersten Schlüssel des zweiten Schlüsselpaares den Datensatz signiert, wobei die Operation auf dem Datensatz mit dem zweiten Schlüssel des zweiten Schlüsselpaares den Datensatz authentifiziert.

Die Sicherheit des Verfahrens wird weiter erhöht.

Es kann vorgesehen sein, dass das der Datensatz durch eine Operation auf dem Datensatz mit einem ersten Schlüssel eines zweiten Schlüsselpaares gesichert ist, wobei im Datensatz die Information zur zeitlichen Gültigkeit eine Zeitangabe und die Information zur Identifikation Identifikationsdaten umfasst. Dadurch wird die Entscheidung ob der Zugriff erlaubt ist oder nicht, wirkungsvoll umgesetzt.

Die Sicherheit wird erhöht, wenn die Operation zusätzlich zu einer verschlüsselten Datenübertragung vorgesehen ist.

Ein Endgerät, insbesondere mobiles Endgerät, für einen Nutzer, ist dazu ausgebildet, Schritte im Verfahren zur Auslösung einer Anforderung eines Zugriffs auf eine Produktionseinrichtung mit einem Endgerät auszuführen.

Eine erste Recheneinrichtung, insbesondere ein Server, ist dazu ausgebildet, Schritte im Verfahren zur Steuerung eines Zugriffs auf eine Produktionseinrichtung auszuführen.

Eine zweite Recheneinrichtung, insbesondere ein Bestellserver, ist dazu ausgebildet, das Verfahren zum Zugriff auf eine Produktionseinrichtung auszuführen.

Ein System das die erste Recheneinrichtung und die zweite Recheneinrichtung umfasst ermöglicht es, gezielt Zugriff auf eine Produktionseinrichtung in einem Bestellprozess zu gewähren oder zu verwehren.

Der Zugang zum Bestellvorgang wird einem Nutzer oder Betrieb durch ein Computerprogramm ermöglicht, das computerlesbare Instruktionen umfasst, bei deren Ausführung durch einen Computer Schritte in einem Verfahren abläuft.

Weitere vorteilhafte Ausführungsformen ergeben sich aus der folgenden Beschreibung und der Zeichnung. In der Zeichnung zeigt:
- Fig. 1: eine schematische Darstellung eines Systems,
- Fig. 2: Schritte in einem Verfahren zum Zugriff auf eine Produktionseinrichtung.

In der Folgenden Beschreibung werden Operationen auf Daten mit einem ersten Schlüsselpaar SP1 und einem zweiten Schlüsselpaar SP2 ausgeführt. Das erste Schlüsselpaar SP1 und das zweite Schlüsselpaar SP2 sind im Beispiel Schlüsselpaare eines kryptographischen Verfahrens. Es können verschiedene kryptographische Verfahren eingesetzt werden. Mit den Operationen werden die Daten gesichert. Gesichert bedeutet in diesem Kontext, dass eine unberechtigte Verwendung von Daten, die mit der Operation gesichert sind, oder ein unberechtigter Zugriff auf diese erschwert wird.

Das erste Schlüsselpaar SP1 umfasst einen ersten Schlüssel S11 und einen zweiten Schlüssel S12.

Das zweite Schlüsselpaar SP2 umfasst einen ersten Schlüssel S21 und einen zweiten Schlüssel S22.

Die Operationen können einerseits Verschlüsselung oder Entschlüsselung umfassen. Die Operationen können andererseits Signieren oder Authentifizieren umfassen.

Verschlüsselung oder Entschlüsselung:
Mit dem ersten Schlüssel S11 des ersten Schlüsselpaares SP1 sind beispielsweise Daten entschlüsselbar, die mit dem zweiten Schlüssel S12 des ersten Schlüsselpaares SP1 verschlüsselt wurden.

Mit dem zweiten Schlüssel S22 des zweiten Schlüsselpaares SP2 sind beispielsweise Daten entschlüsselbar, die mit dem ersten Schlüssel S21 des zweiten Schlüsselpaares SP2 verschlüsselt wurden.

Signieren oder Authentifizieren:
Mit dem ersten Schlüssel S11 des ersten Schlüsselpaares SP1 sind beispielsweise Daten verifizierbar, die mit dem zweiten Schlüssel S12 des ersten Schlüsselpaares SP1 signiert wurden.

Mit dem zweiten Schlüssel S21 des zweiten Schlüsselpaares SP2 sind beispielsweise Daten verifizierbar, die mit dem ersten Schlüssel S21 des zweiten Schlüsselpaares SP2 signiert wurden.

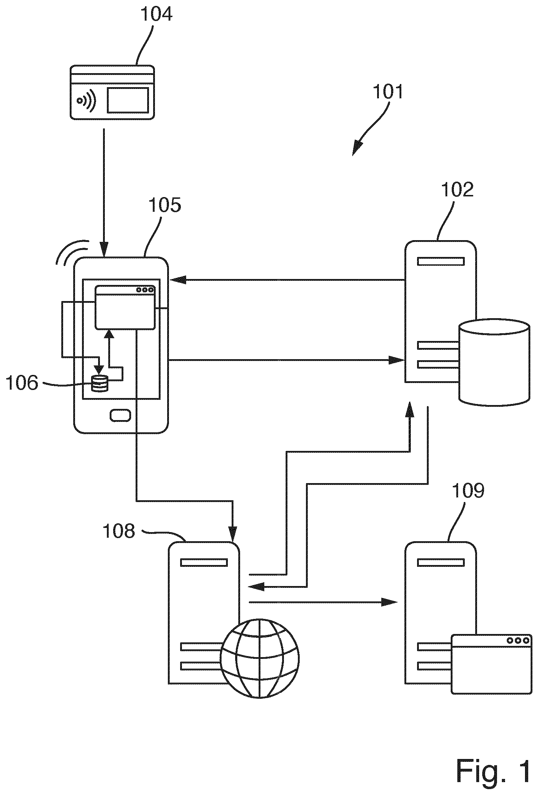

In Figur 1 ist ein System 101 schematisch dargestellt. Das System 101 umfasst eine erste Recheneinrichtung 102. Die erste Recheneinrichtung 102 ist ein Server.

Die erste Recheneinrichtung 102 umfasst eine Datenbank 103 oder ist mit dieser über eine Datenleitung verbunden. Die Datenbank 103 umfasst eine Vielzahl von Datensätzen, die unterschiedliche Identifikationsdaten umfassen.

Die erste Recheneinrichtung 102 ist ausgebildet, Identifikationsdaten insbesondere aus der Datenbank 103 bereitzustellen. Die Identifikationsdaten umfassen einen ersten Teil I1 und einen zweiten Teil I2.

Die Identifikationsdaten umfassen im Beispiel eine Objekt-ID. Mit der Objekt-ID ist ein Gesamtsystem bestehend aus N Schlüsseln und N Schließzylindern eindeutig identifiziert.

Das System 101 umfasst eine nutzerspezifische passive oder aktive Sendeeinrichtung 104. Im Beispiel ist die Sendeeinrichtung 104 eine Sicherungskarte. Die Sicherungskarte ist im Beispiel einer bestimmten Objekt-ID zugeordnet.

Auf der Sendeeinrichtung 104 sind Daten K1, K2, K3, K4 gespeichert.

Die Daten K1 umfassen den ersten Schlüssel S11 des ersten Schlüsselpaares SP1.

Die Daten K2 umfassen einen verschlüsselten zweiten Teil I2 der Identifikationsdaten für die Objekt-ID.

Die Daten K3 umfassen den ersten Schlüssel S21 des zweiten Schlüsselpaares SP2.

Die Daten K4 umfassen den ersten Teil I1 der Identifikationsdaten für die Objekt-ID, insbesondere unverschlüsselt.

Der zweite Schlüssel S12 des ersten Schlüsselpaares SP1 und der zweite Schlüssel S22 des zweiten Schlüsselpaares SP2 werden als Authentifizierungsdaten der Recheneinrichtung 101 bereitgestellt.

Das System 101 ist zur Kommunikation mit einem Endgerät 105 eines Nutzers ausgebildet. Das Endgerät 105 ist im Beispiel ein Mobiltelefon. Auf dem Mobiltelefon kann eine Applikation, d.h. ein Computerprogramm, ablaufen, mit dem vom Nutzer ein Verifizierungsprozess für einen Bestellvorgang für eine Schließanlage oder ein Teil der Schließanlage, z.B. ein Schlüssel und/oder ein Schloss, vorgenommen werden kann. Verifizierungsprozess bedeutet in diesem Zusammenhang, dass verifiziert wird, ob der Nutzer bestellen darf oder nicht.

Das Endgerät 105 umfasst einen Datenspeicher 106. Das Endgerät 105 ist ausgebildet, Schritte in einem im Folgenden beschriebenen Verfahren auszuführen.

Das System 101 umfasst eine zweite Recheneinrichtung 108. Die zweite Recheneinrichtung 108 ist im Beispiel ein Bestellserver, der einen Dienst eines Händlers im Bestellvorgang bereitstellt. Der Dienst ermöglicht es dem Nutzer, den Verifizierungsprozess für den Bestellvorgang über das Mobiltelefon auszuführen. Im Beispiel stellt der Dienst eine Auswahl der Schließanlage oder des Teils davon bereit. Der Dienst ermöglicht es, Daten dafür, d.h. Bestellinformationen, über das Mobiltelefon einzugeben und den Verifizierungsprozess für den Bestellvorgang auszuführen. Der Dienst ermöglicht es im Beispiel Identifikationsdaten und Token dafür zu empfangen und zu verarbeiten. Der Dienst umfasst eine Benutzeroberfläche eines Internethändlerportals und eine Schnittstelle zum Mobiltelefon dafür. Der Dienst ist im Beispiel ein Computerprogramm oder umfasst mehrere Computerprogramme.

Ein Bezahlvorgang und/oder eine Abwicklung des Bestellvorgangs zwischen Nutzer und einem Fachhändler findet im Beispiel in einem System des Fachhändlers statt. Eine Bestellung des Fachhändlers wird über ein Bestellportal abgewickelt.

Der Nutzer weist sich im Verifizierungsprozess gegenüber dem Bestellportal und dem System des Fachhändlers als zur Bestellung berechtigt aus.

Das System 101 ist zur Kommunikation mit einer Produktionseinrichtung 109 ausgebildet. Die Produktionseinrichtung 109 und/oder das Endgerät 105 kann auch Teil des System 101 sein.

Die erste Recheneinrichtung 102 ist ausgebildet, Schritte in dem im Folgenden beschriebenen Verfahren auszuführen.

Die zweite Recheneinrichtung 108 ist ausgebildet, Bestelldaten B für einen Produktionsprozess zur Fertigung der Schließanlage oder des Teils der Schließanlage, z.B. eines Schlüssels und/oder eines Schlosses, gemäß der Bestelldaten B bereitzustellen. Die Bestelldaten B umfassen im Beispiel Identifikationsdaten aus dem Bestellvorgang.

Die Produktionseinrichtung 109 ist ausgebildet, den Produktionsprozess abhängig von den Bestelldaten B auszuführen. Im Beispiel ist die Produktionseinrichtung 109 zur Fertigung des Teils der Schließanlage, insbesondere eines Schlüssels und/oder eines Schlosses gemäß der Bestelldaten B ausgebildet.

Zum Zugriff auf die Produktionseinrichtung 109 mit dem Endgerät 105 des Nutzers, sind im System 101 insbesondere folgende Schritte vorgesehen:
Auslesen von Daten durch das Endgerät 105 und von der nutzerspezifischen passiven oder aktiven Sendeeinrichtung 104 auf der diese Daten gespeichert sind.

Generieren der Zeitangabe durch das Endgerät 105 des Nutzers, die innerhalb eines zulässigen Zeitbereichs liegt. Der zulässige Zeitbereich definiert im Beispiel ein Ablaufdatum, zu dem die Bestelldaten B ungültig werden.

Generieren eines Tokens FS durch das Endgerät 105 des Nutzers, wobei das Token FS den Datensatz F umfasst, wobei der Datensatz F die Zeitangabe und Identifikationsdaten I1, I2 umfasst. Das Token FS ist im Beispiel eine Zugriffsanforderung und für die erste Recheneinrichtung 102 bestimmt, damit diese prüfen kann, ob ein Zugriff gewährt oder verwehrt wird.

Empfangen des Tokens FS für die erste Recheneinrichtung 102 durch die zweite Recheneinrichtung 108 und vom Endgerät 105 des Nutzers. Das Token FS wird im Beispiel nicht direkt an die erste Recheneinrichtung 102 gesendet, sondern über die zweite Recheneinrichtung 108. Das Endgerät 105 benötigt dafür keine Verbindung zur ersten Recheneinrichtung 101. Das Endgerät 105 benötigt dafür eine Verbindung zur zweiten Recheneinrichtung 108.

Senden des Tokens FS durch die zweite Recheneinrichtung 108 und an die erste Recheneinrichtung 102 zur Verifizierung der Zugriffsanforderung.

Prüfen, ob die erste Recheneinrichtung 102 den Zugriff auf die Produktionseinrichtung 109 erlaubt, oder nicht.

Senden von Produktionsdaten an die Produktionseinrichtung 109, wenn die erste Recheneinrichtung 102 erlaubt, dass durch die zweite Recheneinrichtung 108 Zugriff auf die Produktionseinrichtung 109 gewährt wird, und anderenfalls Ablehnen, dass Zugriff durch die zweite Recheneinrichtung gewährt wird 108. Das bedeutet, im Beispiel gewährt oder verwehrt die zweite Recheneinrichtung 108 dem Endgerät den Zugriff auf die Produktionseinrichtung 109. Das bedeutet, im Beispiel wird die zweite Recheneinrichtung 108 durch die erste Recheneinrichtung 101 gesteuert.

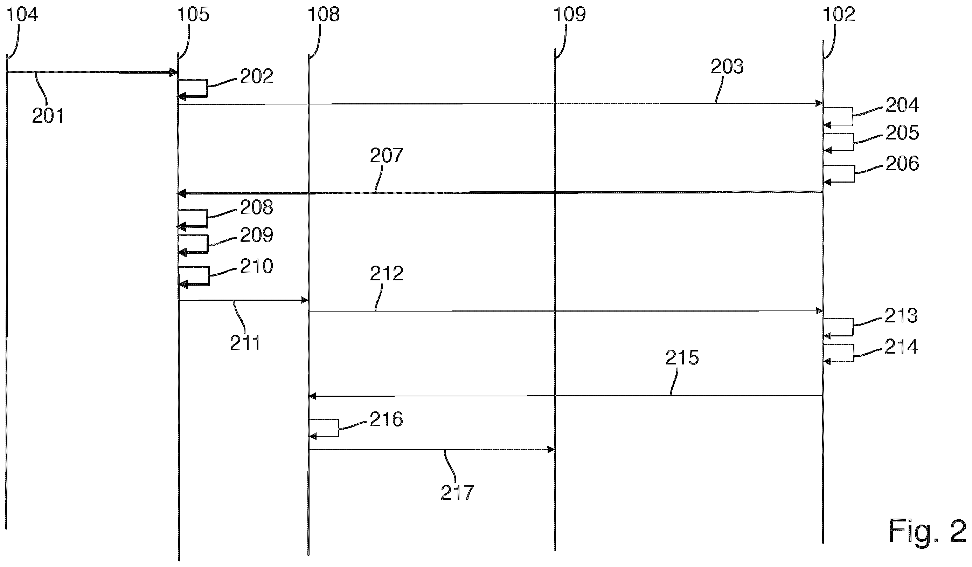

Ein beispielhaftes Verfahren ist in Figur 2 dargestellt und wird am Beispiel des Servers, der Sicherungskarte, des Mobiltelefons, des Bestellservers und der Produktionseinrichtung beschrieben. Das Verfahren beginnt im Beispiel mit einem Schritt 201.

Im Schritt 201 erfolgt ein Auslesen von der Daten K1, K2, K3, K4 der Sicherungskarte 104 durch das Mobiltelefon 105. Im Beispiel wird Near Field Communication, NFC, für das Auslesen eingesetzt. Sowohl das Mobiltelefon als auch die Sicherungskarte sind für NFC ausgebildet. Es kann auch Radio Frequency Identification, RFID oder ein anderes insbesondere kabelloses Übertragungsverfahren eingesetzt werden.

Anschließend wird ein Schritt 202 ausgeführt.

Im Schritt 202 erfolgt eine Speicherung der Daten K1 und K3. Das bedeutet, der erste Schlüssel S11 des ersten Schlüsselpaares SP1, und der erste Schlüssel S21 des zweiten Schlüsselpaares SP2 werden gespeichert. Die Daten werden im Datenspeicher 106 des Endgeräts 105, im Beispiel im Mobiltelefon 105 gespeichert.

Anschließend wird ein Schritt 203 ausgeführt.

Im Schritt 203 erfolgt ein Senden der Daten K2 und K4 durch das Mobiltelefon 105 an den Server 102.

Anschließend wird ein Schritt 204 ausgeführt.

Die Daten K2 umfassen den ersten Teil der Identifikationsdaten I1 im Beispiel unverschlüsselt. Die Daten K2 umfassen den zweiten Teil I2 der Identifikationsdaten und sind schon verschlüsselt auf der Sicherungskarte 104 gespeichert.

Im Schritt 204 erfolgt ein Bestimmen des zweiten Teils I2 der Identifikationsdaten z.B. durch Entschlüsselung der Daten K2 durch den Server. Ein drittes Schlüsselpaar SP3 zum Verschlüsseln zweiten Teils I2 der Identifikationsdaten bei der Herstellung der Sicherungskarte 104 und zum Entschlüsseln des zweiten Teils I2 der Identifikationsdaten im Bestellvorgang mit der Sicherungskarte ist im Beispiel im Server 102 vorgesehen.

Anschließend wird ein Schritt 205 ausgeführt.

Im Schritt 205 erfolgt ein Identifizieren eines in den Identifikationsdaten I1 und I2 übereinstimmenden Datensatzes I1 und I2 im Server 102. Dazu kann ein Vergleichen des in den Daten K4 empfangenen ersten Teils I1 der Identifikationsdaten und des in den Daten K2 empfangenen zweiten Teils der Identifikationsdaten I2 mit den im Server 102 in der Datenbank gespeicherten Datensätzen vorgesehen sein.

Anschließend wird ein Schritt 206 ausgeführt. Es kann vorgesehen sein, dass der Bestellvorgang abgebrochen wird, wenn kein in den Identifikationsdaten I1 und I2 übereinstimmenden Datensatz auffindbar ist.

Im Schritt 206 erfolgt, im Server 102, eine Generierung von Daten A3 durch Verschlüsselung des zweiten Teils I2 der Identifikationsdaten I2 mit dem zweiten Schlüssel S12 des ersten Schlüsselpaares SP1.

Anschließend wird ein Schritt 207 ausgeführt.

Im Schritt 207 erfolgt eine Übertragung der Daten A3 vom Server 102 an das Mobiltelefon 105.

Anschließend wird ein Schritt 208 ausgeführt.

Im Schritt 208 erfolgt, im Mobiltelefon 105, eine Verifizierung der Daten A3 und ein Entschlüsseln des zweiten Teils I2 der Identifikationsdaten I2 mit dem ersten Schlüssel S11 des ersten Schlüsselpaares SP1.

Anschließend wird ein Schritt 209 ausgeführt.

Im Schritt 209 erfolgt ein Generieren des Ablaufdatums und von Bestellinformationen mit dem Computerprogramm, das auf dem Mobiltelefon 105 abläuft.

Im Schritt 209 erfolgt eine Erzeugung eines Datensatzes F zur Freigabe durch das Mobiltelefon 105 und unter Einbeziehung des Ablaufdatums und der Bestellinformationen.

Der Datensatz F umfasst die Zeitangabe und die Identifikationsdaten I1 und I2. Die Zeitangabe kann das Ablaufdatum beispielsweise als absolute Zeitangabe angeben. Die Zeitangabe kann auch einen Startzeitpunkt für eine Bestimmung des Ablaufdatums angeben.

Anschließend wird ein Schritt 210 ausgeführt.

Im Schritt 210 erfolgt, im Mobiltelefon 105, eine Verschlüsselung des Datensatzes F mit dem ersten Schlüssel S21 des zweiten Schlüsselpaares SP2 durch das Mobiltelefon zu einem Token FS.

Anschließend wird ein Schritt 211 ausgeführt.

Im Schritt 211 erfolgt eine Übermittlung des Tokens FS und der Identifikationsdaten I1 und I2 vom Mobiltelefone 105 an den Bestellserver 108.

Das bedeutet, das Mobiltelefon 105 löst eine Anforderung eines Zugriffs auf die Produktionseinrichtung 109 aus.

Anschließend wird ein Schritt 212 ausgeführt.

Im Schritt 212 erfolgt ein Senden einer Anforderung für eine Verifizierung des Tokens FS durch den Bestellserver 108 an den Server 102.

Anschließend wird ein Schritt 213 ausgeführt.

Der Server 102 steuert den Zugriff auf die Produktionseinrichtung 109. Die Steuerung sieht ein Prüfen des Datensatzes F aus dem Token FS.

Im Schritt 213 erfolgt beispielsweise eine Entschlüsselung des Tokens FS durch den Server 102 mit dem zweiten Schlüssel S22 des zweiten Schlüsselpaares SP2.

Anschließend wird, im Server 102, ein Schritt 214 ausgeführt.

Im Schritt 214 erfolgt ein Prüfen, ob ein in den Identifikationsdaten I1 und I2 mit dem Datensatz F übereinstimmender Datensatz in der Datenbank 103 existiert und ob die Zeitangabe innerhalb des zulässigen Zeitbereichs liegt, oder nicht.

Im Schritt 214 erfolgt eine Bestimmung von Bestelldaten B gemäß der Identifikationsdaten I1 und I2 und der Bestellinformationen aus dem Token FS.

Es kann vorgesehen sein, den Bestellvorgang abzubrechen, d.h. Abzulehnen, dass Zugriff durch die zweite

Recheneinrichtung 108 gewährt wird, wenn die Entschlüsselung des Datensatzes F fehlschlägt oder kein übereinstimmender Datensatz in einer Datenbank 103 existiert.

Anschließend wird ein Schritt 215 ausgeführt.

Im Schritt 215 erfolgt ein Erlauben, dass der Zugriff auf die Produktionseinrichtung 109 durch die zweite Recheneinrichtung 108 gewährt wird, wenn ein in den Identifikationsdaten I1 und I2 übereinstimmender Datensatz in der Datenbank 103 existiert und die Zeitangabe innerhalb des zulässigen Zeitbereichs liegt. Anderenfalls erfolgt ein Ablehnen, dass Zugriff durch die zweite Recheneinrichtung 108 gewährt wird.

Wenn der Zugriff erlaubt wird, erfolgt im Beispiel eine Rückübermittlung von Bestelldaten B vom Server 102 an den Bestellserver 108.

Anschließend wird ein Schritt 216 ausgeführt.

Im Schritt 216 erfolgt eine Zuordnung des Tokens FS zu den Bestelldaten B durch den Bestellserver 108.

Anschließend wird ein Schritt 217 ausgeführt.

Im Schritt 217 erfolgt eine Freigabe der Bestellung und Übergabe der Bestelldaten B durch den Bestellserver 108 an die Produktionseinrichtung 109.

Im Beispiel ist das Token FS ein Software-Token. Das Token FS kann auch auf andere Art z.B. als Freigabedatensatz implementiert sein.

Die Kommunikation zwischen der ersten Recheneinrichtung 101, der zweiten Recheneinrichtung 108 und dem Endgerät 105 erfolgt im Beispiel mit wenigstens einem Verschlüsselungsprotokoll.

Verschlüsselungsprotokolle sind in diesem Kontext Netzwerkprotokolle, die die verschlüsselte Datenübertragung über ein Rechnernetz garantieren. Beispielsweise wird ein Netzwerkprotokoll gemäß eines der folgenden Standards verwendet: Transport Layer Security, TLS, Wi-Fi Protected Access 3, WPA3, Wi-Fi Protected Access 2, WPA2, Secure Shell, SSH, oder Internet Protocol Security, IPsec.

Die beschriebenen Schlüsselpaare werden im Beispiel zusätzlich zu einem derartigen Verschlüsselungsprotokoll eingesetzt. Die dadurch erreichte zusätzliche Verschlüsselung unterscheidet sich von diesen Verschlüsselungsprotokollen und auch von anderen Arten der verschlüsselten Datenübertragung, z.B. mittels eines verschlüsselten Virtual Private Network.

Im Beispiel werden Daten zur Identifikation und Authentifizierung verwendet, wobei die Daten K1 den ersten Schlüssel S11 des ersten Schlüsselpaares SP1 umfassen, wobei die Daten K3 den ersten Schlüssel S21 des zweiten Schlüsselpaares SP2 umfassen, wobei die Daten K4 den ersten Teil I1 von Identifikationsdaten zur Anforderung des Zugriffs insbesondere unverschlüsselt umfassen, und wobei die Daten K2 den verschlüsselten zweiten Teil I2 der Identifikationsdaten umfassen. Zur Identifikation oder Authentifizierung können auch andere Daten verwendet werden.

Im Beispiel wird durch das Endgerät 105 des Nutzers eine zeitliche Gültigkeit bestimmt, die die Zeitangabe umfasst, die innerhalb des zulässigen Zeitbereichs liegt.

Im Beispiel wird ein Token verwendet, welches Informationen zur Identifizierung und zur zeitlichen Gültigkeit enthält, wobei das Token den Datensatz F umfasst, der durch die Operation auf dem Datensatz F mit dem ersten Schlüssel S21 des zweiten Schlüsselpaares SP2 gesichert ist, wobei der Datensatz F die Zeitangabe und die Identifikationsdaten I1, I2 umfasst. Es kann auch ein anderes Token verwendet werden, das Informationen zur Authentifizierung, zur Identifizierung und zur zeitlichen Gültigkeit umfasst.

## Patentansprüche

1. Computerimplementiertes Verfahren zur Steuerung eines Zugriffs auf eine Produktionseinrichtung (109) zur Fertigung eines Teils einer Schließanlage, das Verfahren umfasst:
- Empfangen (212) eines Tokens (FS) durch eine erste Recheneinrichtung (102) und von einer zweiten Recheneinrichtung (108), wobei die erste Recheneinrichtung ein Server (102) ist, wobei das Token (FS) Informationen zur Identifizierung und zur zeitlichen Gültigkeit umfasst,
- Prüfen (214), ob ein in der Information zur Identifizierung übereinstimmender Datensatz in einer Datenbank (103) existiert und ob das Token innerhalb seiner zeitliche Gültigkeit ist, oder nicht,
- Erlauben (215), dass der Zugriff auf die Produktionseinrichtung (109) durch die zweite Recheneinrichtung (108) gewährt wird, wenn der in der Information zur Identifizierung übereinstimmende Datensatz in der Datenbank (103) existiert und das Token innerhalb seiner zeitlichen Gültigkeit ist, und anderenfalls Ablehnen dass Zugriff durch die zweite Recheneinrichtung (108) gewährt wird,
wobei das Token (FS) einen verschlüsselten und/oder authentifizierten Datensatz (F) umfasst, wobei der Datensatz (F) die Informationen zur Identifizierung und/oder die zeitliche Gültigkeit umfasst, wobei das Verfahren ein Prüfen und/oder Bestimmen (213) des Datensatzes (F) aus dem Token (FS) umfasst, wobei
der Datensatz durch eine Operation auf dem Datensatz (F) mit einem ersten Schlüssel (S21) eines zweiten Schlüsselpaares (SP2) gesichert ist, wobei im Datensatz (F) die Information zur zeitlichen Gültigkeit eine Zeitangabe und die Information zur Identifizierung Identifikationsdaten (I1, I2) umfasst, wobei das Verfahren ferner umfasst:
- Prüfen und/oder Bestimmen (213) des Datensatzes (F) aus dem Token (FS) durch eine Operation auf dem Datensatz (F) mit einem zweiten Schlüssel (S22) des zweiten Schlüsselpaares (SP2),
- Prüfen (214), ob ein in den Identifikationsdaten (I1, I2) mit dem Datensatz (F) übereinstimmender Datensatz in einer Datenbank (103) existiert und ob die Zeitangabe innerhalb eines zulässigen Zeitbereichs liegt, oder nicht,
- Erlauben (215), dass der Zugriff auf die Produktionseinrichtung (109) durch die zweite Recheneinrichtung (108) gewährt wird, wenn ein in den Identifikationsdaten (I1, I2) übereinstimmender Datensatz in der Datenbank (103) existiert und die Zeitangabe innerhalb des zulässigen Zeitbereichs liegt, und anderenfalls Ablehnen, dass Zugriff durch die zweite Recheneinrichtung (108) gewährt wird,
- Empfangen (203) eines ersten Teils (I1) der Identifikationsdaten (K4) insbesondere unverschlüsselt und eines verschlüsselten zweiten Teils (I2) der Identifikationsdaten (K2) durch die erste Recheneinrichtung (102) und von einem Endgerät (105),
- Identifizieren (205) eines in den Identifikationsdaten (I1, I2) übereinstimmenden Datensatzes (I1, I2) im Server (102) durch Vergleichen des ersten Teils (I1) der Identifikationsdaten (K4) und des zweiten Teils (I2) der Identifikationsdaten (K2) mit den in der ersten Recheneinrichtung (102) insbesondere in der Datenbank (103) gespeicherten Datensätzen (I1 und I2),
- Generierung (206) von Daten (A3) durch Verschlüsselung des zweiten Teils (I2) der Identifikationsdaten mit dem zweiten Schlüssel (S22) des zweiten Schlüsselpaares (SP2),
- Senden (207) der Daten (A3) durch die erste Recheneinrichtung (102) und an das Endgerät (105).

2. Verfahren nach Anspruch 1, **dadurch gekennzeichnet, dass** die Operation auf dem Datensatz (F) mit dem ersten Schlüssel (S21) des zweiten Schlüsselpaares (SP2) den Datensatz (F) verschlüsselt wobei die Operation auf dem Datensatz (F) mit dem zweiten Schlüssel (S22) des zweiten Schlüsselpaares (SP2) den Datensatz (F) entschlüsselt, oder dass die Operation auf dem Datensatz (F) mit dem ersten Schlüssel (S21) des zweiten Schlüsselpaares (S22) den Datensatz (F) signiert, wobei die Operation auf dem Datensatz (F) mit dem zweiten Schlüssel (S22) des zweiten Schlüsselpaares (SP2) den Datensatz (F) authentifiziert.

3. Erste Recheneinrichtung (102), **dadurch gekennzeichnet, dass** die erste Recheneinrichtung (102) dazu ausgebildet ist, das Verfahren nach einem der Ansprüche 1 oder 2 auszuführen.

4. System (101), das die erste Recheneinrichtung (102) nach Anspruch 3 und eine zweite Recheneinrichtung (108) umfasst.

5. Computerprogramm, **dadurch gekennzeichnet, dass** das Computerprogramm computerlesbare Instruktionen umfasst, bei deren Ausführung durch einen Computer Schritte in einem Verfahren nach einem der Ansprüche 1 oder 2 abläuft.

## Claims

1. Computer-implemented method for controlling access to a production facility (109) for manufacturing part of a locking system, the method comprising:
- receiving (212) a token (FS) by means of a first computing unit (102) and from a second computing unit (108), wherein the first computing unit is a server (102), wherein the token (FS) includes information regarding identification and temporal validity,
- checking (214) whether a data set that matches with respect to the information regarding identification exists in a database (103) and whether the token is within its temporal validity or not,
- allowing (215) granting of access to the production facility (109) by the second computing unit (108) if the data set that matches with respect to the information regarding identification exists in the database (103) and the token is within its temporal validity, and otherwise refusing the granting of access by the second computing unit (108),
wherein the token (FS) comprises an encrypted and/or authenticated data set (F), wherein the data set (F) comprises the information regarding identification and/or the temporal validity, wherein the method comprises checking and/or determining (213) the data set (F) from the token (FS), wherein
the data set is secured by an operation on the data set (F) using a first key (S21) of a second key pair (SP2), wherein, in the data set (F), the information regarding temporal validity comprises a time indication and the information regarding identification comprises identification data (I1, I2), wherein the method further comprises:
- checking and/or determining (213) the data set (F) from the token (FS) by means of an operation on the data set (F) using a second key (S22) of the second key pair (SP2),
- checking (214) whether a data set that matches the data set (F) with respect to the identification data (I1, I2) exists in a database (103) and whether the time indication lies within a permissible time range or not,
- allowing (215) the granting of access to the production facility (109) by the second computing unit (108) if a data set that matches with respect to the identification data (I1, I2) exists in the database (103) and the time indication lies within the permissible time range, and otherwise rejecting the granting of access by the second computing unit (108),
- receiving (203) a first part (I1) of the identification data (K4), which is in particular unencrypted, and an encrypted second part (I2) of the identification data (K2) by means of the first computing unit (102) and from an end device (105),
- identifying (205) a data set (I1, I2) in the server (102) that matches with respect to the identification data (I1, I2) by comparing the first part (11) of the identification data (K4) and the second part (I2) of the identification data (K2) with the data sets (I1 and I2) stored in the first computing unit (102), in particular in the database (103),
- generating (206) data (A3) by encrypting the second part (I2) of the identification data using the second key (S22) of the second key pair (SP2),
- sending (207) the data (A3) by means of the first computing unit (102) and to the end device (105).

2. Method according to claim 1, **characterized in that** the operation on the data set (F) using the first key (S21) of the second key pair (SP2) encrypts the data set (F), the operation on the data set (F) using the second key (S22) of the second key pair (SP2) decrypting the data set (F), or **in that** the operation on the data set (F) using the first key (S21) of the second key pair (S22) signs the data set (F), the operation on the data set (F) using the second key (S22) of the second key pair (SP2) authenticating the data set (F).

3. First computing unit (102), **characterized in that** the first computing unit (102) is designed to execute the method according to either of claims 1 or 2.

4. System (101) comprising the first computing unit (102) according to claim 3 and a second computing unit (108).

5. Computer program, **characterized in that** the computer program comprises computer-readable instructions, in the execution of which by a computer, steps are run in a method according to either of claims 1 or 2.

## Revendications

1. Procédé implémenté par ordinateur pour le contrôle d'un accès à une installation de production (109) pour la fabrication d'une partie d'un système de fermeture,
- le procédé comprend :
- la réception (212) d'un jeton (FS) par un premier dispositif de calcul (102) et par un deuxième dispositif de calcul (108), le premier dispositif de calcul étant un serveur (102), le jeton (FS) comprenant des informations d'identification et de validité temporelle,
- la vérification (214) qu'il existe dans la base de données (103) un enregistrement correspondant aux informations d'identification et si le jeton est dans sa période de validité, ou non,
- l'autorisation (215) de l'accès à l'installation de production (109) au deuxième dispositif de calcul (108) lorsque l'enregistrement correspondant aux informations d'identification existe dans la base de données (103) et que le jeton est dans sa période de validité, et sinon refuser d'accorder l'accès au deuxième dispositif de calcul (108),
le jeton (FS) comprend un enregistrement (F) chiffré et/ou authentifié, l'enregistrement (F) comprenant les informations d'identification et/ou la validité temporelle, le procédé comprenant une vérification et/ou détermination (213) de l'enregistrement (F) à partir du jeton (FS), où l'enregistrement est sécurisé par une opération sur l'enregistrement (F) avec une première clé (S21) d'une deuxième paire de clés (SP2), l'enregistrement (F) comprenant l'information de validité temporelle sous forme d'une indication temporelle et l'information d'identification comprenant des données d'identification (Il, I2), le procédé comprenant en outre :
- la vérification et/ou détermination (213) de l'enregistrement (F) à partir du jeton (FS) par une opération sur l'enregistrement (F) avec une deuxième clé (S22) de la deuxième paire de clés (SP2),
- la vérification (214) s'il existe dans la base de données (103) un enregistrement correspondant, d'après les données d'identification (Il, I2), à l'enregistrement (F), et si l'indication temporelle se situe dans une plage temporelle admissible, ou non,
- l'autorisation (215) de l'accès à l'installation de production (109) au deuxième dispositif de calcul (108) si un enregistrement correspondant aux données d'identification (Il, I2) existe dans la base de données (103) et si l'indication temporelle se situe dans la plage temporelle admissible, et sinon
Le refus de l'accès à l'installation de production (109) soit accordé au deuxième dispositif de calcul (108),
- La réception (203) d'une première partie (Il) des données d'identification (K4), notamment en clair, et d'une deuxième partie (I2) des données d'identification (K2) chiffrée, par le premier dispositif de calcul (102) et par un terminal (105),
- L'identification (205) d'un enregistrement (Il, I2) correspondant dans le serveur (102) en comparant la première partie (Il) des données d'identification (K4) et la deuxième partie (I2) des données d'identification (K2) avec les enregistrements (Il et I2) stockés dans le premier dispositif de calcul (102), notamment dans la base de données (103),
- La génération (206) de données (A3) par chiffrement de la deuxième partie (I2) des données d'identification avec la deuxième clé (S22) de la deuxième paire de clés (SP2),
- L'envoi (207) des données (A3) par le premier dispositif de calcul (102) au terminal (105)

2. Procédé selon la revendication 1, **caractérisé en ce que** l'opération sur l'enregistrement (F) avec la première clé (S21) de la deuxième paire de clés (SP2) chiffre l'enregistrement (F), tandis que l'opération sur l'enregistrement (F) avec la deuxième clé (S22) de la deuxième paire de clés (SP2) déchiffre l'enregistrement (F), ou que l'opération sur l'enregistrement (F) avec la première clé (S21) de la deuxième paire de clés (SP2) signe l'enregistrement (F), tandis que l'opération sur l'enregistrement (F) avec la deuxième clé (S22) de la deuxième paire de clés (SP2) authentifie l'enregistrement (F).

3. Premier dispositif de calcul (102), **caractérisé en ce que** le premier dispositif de calcul (102) est configuré pour exécuter le procédé selon l'une quelconque des revendications 1 ou 2.

4. Système (101) comprenant le premier dispositif de calcul (102) selon la revendication 3 et un deuxième dispositif de calcul (108).

5. Programme informatique, **caractérisé en ce que** le programme informatique comprend des instructions lisibles par machine dont l'exécution par un ordinateur entraîne l'exécution d'étapes d'un procédé selon l'une quelconque des revendications 1 ou 2.
